(19) Europäisches Patentamt / European Patent Office / Office européen des brevets

(11) **EP 4 367 310 B1**

(12) **EUROPEAN PATENT SPECIFICATION**

(45) Date of publication and mention
of the grant of the patent:
**20.11.2024 Bulletin 2024/47**

(21) Application number: **23700387.6**

(22) Date of filing: **03.01.2023**

(51) International Patent Classification (IPC):
**D04H 1/4291** *(2012.01)*    **D01D 5/22** *(2006.01)*
**D01D 5/32** *(2006.01)*    **D01F 8/06** *(2006.01)*
**D04H 1/4382** *(2012.01)*    **D04H 1/4391** *(2012.01)*
**D04H 1/541** *(2012.01)*    **D04H 3/007** *(2012.01)*
**D04H 3/147** *(2012.01)*

(52) Cooperative Patent Classification (CPC):
**D04H 1/4291; D01D 5/0985; D01D 5/22;
D01D 5/32; D01F 1/10; D01F 8/06; D04H 1/43832;
D04H 1/43918; D04H 1/5414; D04H 3/007;
D04H 3/147**

(86) International application number:
**PCT/EP2023/050033**

(87) International publication number:
**WO 2023/131591 (13.07.2023 Gazette 2023/28)**

(54) **NONWOVEN MATERIAL COMPRISING CRIMPED MULTICOMPONENT FIBERS**

VLIESMATERIAL MIT GEKRÄUSELTEN MEHRKOMPONENTENFASERN

MATÉRIAU NON TISSÉ COMPRENANT DES FIBRES MULTICOMPOSÉES FRISÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.01.2022 EP 22150331**

(43) Date of publication of application:
**15.05.2024 Bulletin 2024/20**

(73) Proprietors:
• **Fibertex Personal Care A/S**
**9220 Aalborg (DK)**
• **Reifenhäuser GmbH & Co. KG Maschinenfabrik**
**53844 Troisdorf (DE)**

(72) Inventors:
• **WANG, Jingbo**
**4021 Linz (AT)**
• **FIEBIG, Joachim Edmund**
**4209 Engerwitzdorf (AT)**
• **VAN PARIDON, Henk**
**3583 Beringen (BE)**
• **TOBIESON, Gustaf**
**444 86 Stenungsund (SE)**
• **SOMMER, Sebastian**
**53844 Troisdorf (DE)**
• **BOHL, Patrick**
**53773 Hennef (DE)**
• **GEUS, Hans-Georg**
**53859 Niederkassel (DE)**
• **RISE, Hansen Morten**
**9000 Aalborg (DK)**
• **AGERSNAP SCHERER, Mathias**
**Hampshire RG24 9RW (GB)**
• **BROCH, Thomas**
**9260 Gistrup (DK)**

(74) Representative: **Frick, Robert
Lorenz Seidler Gossel
Rechtsanwälte Patentanwälte
Partnerschaft mbB
Widenmayerstraße 23
80538 München (DE)**

(56) References cited:
EP-A1- 3 321 407    EP-B1- 3 246 444
WO-A1-2020/230006    WO-A1-2021/226246
US-A1- 2010 261 399

**Description**

The invention relates to nonwoven fabric sheets containing crimped multicomponent fibers.

Flat sheets of nonwoven materials are used in the hygiene industry for making baby diapers and similar products on a large scale. For improved wearer comfort and function of these products, the industry is striving to increase softness and flexibility of the materials. The incorporation of crimped multicomponent fibers to such materials, instead of or in addition to linear monocomponent fibers, is an approach to meet these demands that has extensively been described in the literature and implemented to the market. The use of crimped fibers makes nonwoven fabrics loftier, with less density, and renders the fabrics more flexible and soft. It is much like with straight hair and curly hair.

Generally, crimped multicomponent fibers comprise two or more polymers of different physical properties that are asymmetrically distributed over their cross section. The most common is side-by-side. This configuration causes the fibers to crimp when they are physically stressed like, in the case of spunbonded fibers, during fiber drawing and quenching.

One of the earliest patents on the technology is US 6,454,989 B1, originally filed by the US company Kimberly-Clark. The document, in the context of spunbonding, which meanwhile has become industry standard for nonwoven materials for hygiene applications, explains the basic principles and comprises a laundry list of options under which the polymers distributed over the cross section of the fibers can be different. Options mentioned include melting point differences, differences in crystallization behaviour, differences in melt elasticity, differences in molecular weight averages or distributions, and many others, next to generic ranges for degrees of difference. Few of the options are actually tested, however, and much research work has since then been done to reveal actually workable conditions and reveal configurations that provide materials with particularly desirable properties under various aspects. Patents that resulted out of these developments include EP 3 165 656 B1, EP 3 121 314 B1, EP 3 246 443 B1 and EP 3 246 444 B1, all going back to research made by the co-applicants of the present application. Nonwoven spunbond fabrics comprising multicomponent filaments are also known from EP 3 321 407 A1, WO 2020/230006 A1, US 2010/261399 A1 and WO 2021/226246 A1.

Despite these various improvements, however, there is still a need for optimization and diversification of polymers that can be used for making such materials.

Against this background, the present invention proposes a nonwoven fabric sheet comprising crimped multicomponent fibers, wherein the fibers comprise two different polymer components (A) and (B) distributed over the cross section of the fiber in a side by side arrangement, wherein the interface line, contained in the radial plane of the fibers, between the two polymer components (A) and (B) is curved and its curvature (c), as defined by the quotient (h)/(b), is 0.05 to 0.25, wherein (b), the "baseline length", is the length of the imaginary straight baseline connecting the two endpoints of the curved interface line, and (h), the "bow height", is the distance of the crest of the curved interface line from the baseline. The interface line has the shape of a single arc, i.e. is not wavy and, in more mathematical terms, has no inflection point at which the curvature changes sign. Reference is again made to the shape of the interface line as contained in any radial plane of the fibers, and hence as visible when the fiber is cut in radial direction.

The radial plane is perpendicular to the longitudinal direction of the fibers, and as such at a 90°angle to the longitudinal axis of the fiber at the given position. The shape of the radial interface line, which defines the present invention, is the shape of the interface line that is contained in this plane. This is to distinguish from the contour of the interface along a longitudinal or oblique line, which in a crimped fiber is naturally curved to some extent by geometrical relation. The curved nature of the radial interface line, which defines the present invention, is not geometrically related to the crimp of the fiber.

Further research aiming at a more fundamental understanding of crimped bicomponent fibers revealed that if the radial interface line between the components of a multicomponent fiber, whose polymer components are arranged side by side, has a curvature as specified, beneficial crimping behaviour can be observed.

In preferred embodiments the curvature (c) of the radial interface line is between 0.08 to 0.22, preferably 0.10 to 0.20, more preferably 0.12 to 0.18. Very favourable crimping behaviour has been observed in many cases when the curvature is within these ranges.

For the purposes of the present application, a side-by-side arrangement of polymer components (A) and (B) is given in a standard side-by-side fiber, but can also be present in an eccentric sheath-core fiber with a D-shaped core, the latter essentially corresponding to a side-by-side fiber enclosed by a coating of either of the polymers. Still, the effects when the curvature is in the range as defined are observed in particular in side-by-side bicomponent fibers, which comprise only two polymer components distributed over the cross section in a side-by-side arrangement.

While the effects are also observed for other fiber types, like staple fibers, in a preferred embodiment, the nonwoven material of the present invention is a spunbonded material and the crimped multicomponent fibers are spunbonded fibers.

The sheet can comprise the bicomponent fibers following the inventive definition, in addition to other fibers like linear monocomponent fibers, or consist of bicomponent fibers following the inventive definition. As in reality the millions of fibers forming for a nonwoven material are never always identical, the term consisting of must be understood in a sense that the requirement is fulfilled when the fibers are all the same by production and the vast majority of fibers, e.g. more than 80% of the fibers, preferably more than 90% of the fibers show the inventive characteristic.

To facilitate spinning of spunbonded multicomponent fibers of the invention, the spunbonding machine must allow for a side-by-side flow of directly adjacent streams of two different polymers on the scale of a single fiber. The streams combine shortly before the combined stream leaves the spinnerette (die plate). The formation of a curved interface and the degree of curvature depends on the polymers used and process conditions during drawing and quenching of the fibers.

In this context, it is preferred that at least one of the polymer components (A) or (B) is a polyolefin polymer. More preferably still, both polymer component (A) and polymer component (B) are polyolefin polymers. Among the polyolefin polymers, propylene homopolymers, ethylene homopolymers, and co-polymers of propylene or ethylene with other $\alpha$-olefins, especially propylene-$\alpha$-olefin copolymers like propylene-ethylene copolymers or propylene-C4-C8-co-polymers, are preferred. Propylene-ethylene copolymers in an embodiment are most preferred. In the given context, a homopolymer is defined as a polymer having a co-monomer content of smaller 1 weight percent, preferably smaller than 0.5 weight percent. The co-polymers of propylene or ethylene with other $\alpha$-olefins, preferably have a co-monomer content of between 1.0 and 5.5 weight percent. The co-polymers are preferably random co-polymers.

In a specifically preferred embodiment, one of the polymer components (A) is a propylene homopolymer and the other one of the polymer components (B) is a propylene-$\alpha$-olefin copolymer, wherein the propylene-$\alpha$-olefin copolymer preferably has a co-monomer content of between 1.0 and 5.5 weight percent.

Further in this context, the difference in crystallization temperatures $T_c$ of the two polymer components has been identified as a paramount parameter. In a preferred embodiment, the absolute value of the difference of the crystallization temperature $[T_c(A)]$ of the polymer component (A) and the crystallization temperature $[T_c(B)]$ of the polymer component (B) is greater than 0°C and smaller than 30°C, preferably greater than 10°C and smaller than 25°C, as measured by differential scanning calorimetry (DSC, ISO 11357-1 & -2).

In the case that polymer component (A) is a propylene homopolymer and polymer component (B) is a propylene-$\alpha$-olefin copolymer, it is preferred that the crystallization temperature $[Tc(A)]$ of the propylene homopolymer (A) is higher than the crystallization temperature $[Tc(B)]$ of the propylene-$\alpha$-olefin copolymer (B) to the said extent.

In one embodiment, the curved radial interface line is arched towards the polymer component with the lower crystallization temperature, preferably a propylene-$\alpha$-olefin-copolymer. The polymer component with the higher crystallization temperature, preferably the homo-polypropylene, has the more compact cross-section.

The absolute value for the crystallization temperature $[T_c(A)]$ for the polymer component (A) with the higher crystallization temperature preferably lies in the range of between 90°C to 135°C, preferably 100°C to 125°C. The absolute value for the crystallization temperature $[T_c(B)]$ for the polymer component (B) with the lower crystallization temperature preferably lies in the range of between 80°C to 125°C, preferably 90°C to 115°C.

The crystallization temperatures $T_c$ of the polymers (A) and (B) are connected to the chemical nature of the polymers, and vary, for example, with the co-monomer content in a propylene-$\alpha$-olefin copolymer, the tacticity, or the molecular weight distributions.

Crystallization behaviour and kinetics can further be influenced and balanced against each other by adding a nucleating agent to one or both of the polymer components (A) and (B).

Nucleating agents increase the number of sites where crystallites begin to form, and hence promote crystallization. Suitable nucleating agents comprise nonitol- or sorbitol based nucleating agents.

In a preferred embodiment, the nucleating agent is an $\alpha$-nucleating agent. Suitable $\alpha$-nucleating agents comprise salts of monocarboxylic acids and polycarboxylic acids (e.g. sodium benzoate or aluminum tert-butylbenzoate), dibenzylidenesorbitol (e.g. 1,3:2,4 dibenzylidenesorbitol), C1-C8-alkyl-substituted dibenzylidenesorbitol derivatives (e.g. methyldibenzylidenesorbitol, ethyldibenzylidenesorbitol or dimethyldibenzylidenesorbitol, like 1,3:2,4 di(methylbenzylidene) sorbitol), or substituted nonitol-derivatives (e.g. 1,2,3,-trideoxy-4,6:5,7-bis-O-[(4-propylphenyl)methylene]-nonitol), salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], vinylcycloalkane polymers and vinylalkane polymers. Dibenzylidenesorbitol (e.g. 1,3:2,4 dibenzylidene sorbitol), dibenzylidenesorbitol derivative, preferably dimethyldibenzylidenesorbitol (e.g. 1,3:2,4 di(methylbenzylidene) sorbitol), or substituted nonitol-derivatives, such as 1,2,3,-trideoxy-4,6:5,7-bis-O-[(4-propylphenyl)methylene]-nonitol, sodium 2,2'-methylenebis (4, 6,-di-tert-butylphenyl) phosphate, vinylcycloalkane polymers, or vinylalkane polymers may be most preferred.

Suitable amounts of addition lie between 0.01-5000 ppm, preferably in the range of 0.05-4500 ppm, more preferably 0.1-4000 ppm, like 0.15-3000 ppm based on the total weight of the respective polymer component.

The difference in melting points $T_m$ of the two polymer components has been identified as a parameter that can be important.

The melting temperature $T_m$ of the polymer component (A) with the higher crystallization (and melting) temperature preferably lies in the range of between 155°C to 164°C (when determined by DSC, ISO 11357-1 & -2). The absolute value for the melting temperature $T_m$ of the polymer component (B) with the lower crystallization (and melting) temperature preferably lies in the range of between 142°C to 155°C (when determined by DSC, ISO 11357-1 & -2).

Other relevant characteristics of the polymers comprise the melt flow rate MFR and the molecular weight distribution.

The melt flow rate of at least one, more preferably both of the two polymer components (A) and (B) is in the range of 15 to 120 g/10 min (when determined according to ISO 1133 at 230°C and 2.16 kg). Preferred melt flow rates at least for the component having the higher melt flow rate, in embodiments the propylene homopolymer, are below 60 g/10 min.

The polydispersity ($M_w/M_n$) of at least one, more preferably both of the two polymer components (A) and (B) is in the range of 4.5 to 10.0 (when measured by size exclusion chromatography according to ISO 16014), preferably in the range of 5.0 to 9.0, more preferably in the range of 5.5 to 8.5. The absolute difference between the polydispersity of the two polymer components is preferably 0.3 or higher.

In the case that polymer component (A) is a propylene homopolymer and polymer component (B) is a propylene-α-olefin copolymer, it is preferred that the polydispersity of the propylene homopolymer (A) is lower than the polydispersity of the propylene-α-olefin copolymer (B).

Also a difference in melt viscosity at a given temperature can be a relevant parameter in the given context. In the case that polymer component (A) is a propylene homopolymer and polymer component (B) is a propylene-α-olefin copolymer, it is preferred that the melt viscosity of the propylene homopolymer (A) is lower than the melt viscosity of the propylene-α-olefin copolymer (B).

In a further embodiment, at least one, more preferably both of the two polymer components (A) and (B) have a xylene cold soluble content (XCS) in the range of 1.5 to 10.0 wt%, more preferably in the range of 1.5 to 8.0 wt%. These amounts of xylene cold solubles (XCS) are representative of a low content in any elastomeric polymer component, like an ethylene propylene rubber, and hence monophasic polymer components in which no elastomeric phase is dispersed. Such systems are featured by a rather high xylene cold soluble content.

In one embodiment, one or both of the polymer components (A) and (B) are visbroken. Visbreaking refers to a controlled polymer chain cracking by adding a visbreaking additive to the polymer components. The polymer chain cracking occurs at elevated temperatures when the polymer components are molten and extruded through the spinnerette of the spunbonding machine. Suitable visbreaking additives comprise organic peroxides, organic hydroxylamine esters or mercaptane compounds as source of free radicals. Suitable amounts of addition are between 100 ppm and 500 ppm. Visbreaking can be used to influence viscosity and adjust the polydispersity, and further melting and crystallization behavior of the two polymer components (A) and (B) against each other.

In one specific embodiment of the present invention, only one of the propylene polymers (A and B) is visbroken, and the absolute value of the difference of Mz/Mw between propylene polymer A and B is from 0.3 to 10.0, preferably from 0.5 to 8.5, more preferably from 1.0 to 5.5, even more preferably from 1.5 to 4.0.

In another embodiment of the present invention, both of the Propylene polymers (A and B) are visbroken, and the absolute value of the difference of Mz/Mw between propylene polymer A and B is between 0.0 to 0.3, preferably between 0.00 to 0.25, more preferably between 0.00 to 0.22, even more preferably between 0.00 to 0.15.

The findings of this invention are not restricted to fibers where the two polymer components (A) and (B) arranged side-by-side are used within the fiber in a 50:50 weight ratio. Rather, the finding is applicable to a wide range of weight ratios, like from 90:10 to 10:90. Preferred weight ratios leading to pronounced crimp are between 80:20 and 20:80, more preferably between 70:30 and 30:70, and yet more preferred between 60:40 and 40:60, however.

In one embodiment, the weight ratio of the polymer component (A) with the higher crystallization temperature, preferably a propylene homopolymer, to the polymer component (B) with the lower crystallization temperature, preferably a propylene-α-olefin-copolymer, is smaller 50:50, meaning that there is an excess of the polymer component (B) with the lower crystallization temperature in the fiber. This has been found to potentially enhance crimp.

In an alternative embodiment, the weight ratio of the polymer component (A) with the higher crystallization temperature, preferably a propylene homopolymer, to the polymer component (B) with the lower crystallization temperature, preferably a propylene-α-olefin-copolymer, is greater 50:50, meaning that there is an excess of the polymer component (A) with the higher crystallization temperature in the fiber. This has been found to potentially enhance stability of the production process.

The crimped bicomponent fibers are typically helically crimped. In one embodiment the average crimp number of the crimped multicomponent fibers is in the range of at least 7 and preferably at least 10 crimps per cm in the fiber, as measured as per Japanese standard JIS L-1015-1981 under a pretension load of 2mg/denier. The crimp amplitude is preferably in the range of below 0,30 mm and preferably between 0,20 and 0,30 mm when measured according to JIS L-1015-1981 under a pre-tension load of 2mg/denier.

The fibers preferably have a linear mass density in the range of between 1,0 to 2,2 denier, preferably 1,2 to 2,0 denier.

The basis weight of each of the spunbonded layers within the multilayer sheet may be between 4-40 g/m$^2$, preferably between 5-25 g/m$^2$.

The density of the nonwoven fabric sheet is preferably less than 60 mg/cm$^3$ and preferably less than 50 mg/cm$^3$, which are values that are typical for high loft nonwovens with crimped fibers. Standard loft nonwovens with uncrimped fibers, as a comparison, typically have densities higher than 60-70 mg/cm$^3$.

The thickness of the nonwoven fabric sheet is preferably greater than 0,35 mm for basis weights of 20 g/m$^2$ or more, when measured according to WSP.120.6, option A, pressure of 0,5 kPa on a 2500 mm$^2$ plate.

In one embodiment, the spunbonded sheet forms one layer of a multilayer sheet comprising, in addition to the spunbonded sheet according to the invention, one or more additional layers. The additional layers can be nonwoven materials, like additional spunbonded sheets or meltblown sheets, or other sheets like polymer films or woven fabrics. Preferred embodiments comprise S$_n$-type structures (like SS, SSS, etc.), where the sheet according to the invention is combined with at least one further spunbonded nonwoven fabric sheets, preferably a spunbonded nonwoven fabric sheet formed from non-crimped fibers, like monocomponent fibers, or any SM- or SMS-type structures (like SSM, SSMS, SMMS, SSMMS, etc.), where the sheet according to the invention is combined with one or more meltblown nonwoven fabric sheets, and optionally in addition with at least one further spunbonded nonwoven fabric sheet, preferably a spunbonded nonwoven fabric sheet formed from non-crimped fibers.

For the multilayer sheet comprising a nonwoven sheet according to the invention, it is preferred that the nonwoven sheet according to the invention forms an outer layer of the multilayer sheet.

In one embodiment, the nonwoven fabric sheet or multilayer sheet comprises a bond pattern that is introduced by calander rolls during manufacture. In one embodiment, the bond pattern comprises a bond area of 10-16 % and/or a dot density of 20-45 dots/cm$^2$ and/or a dot size of 0,35-0,55 mm$^2$ per dot. These relatively open bond patterns are typical for sheets comprising high loft spunbonded materials formed from crimped fibers.

The basis weight of each of the spunbonded layers within the multilayer sheet may be between 3-25 g/m$^2$, preferably between 4-20 g/m$^2$. The basis weight of the meltblown layer may be between 0,5-5 g/m$^2$, preferably between 1-4 g/m$^2$.

The invention further relates to a method for making a spunbonded nonwoven fabric sheet or a multilayer as defined above.

The spunbonded nonwoven fabric sheet is made in an apparatus comprising at least two extruders with a spinnerette, a drawing channel and a moving belt, wherein the fibers are spun in a spinnerette, drawn in a drawing channel and laid down on a moving belt, wherein the apparatus comprises a pressurized process air cabin from which process air is directed through the drawing channel to draw fibers.

The drawing channel may comprise more than one section. The drawing channel or a section of the drawing channel may get narrower with increasing distance from the spinnerette. It one embodiment the converging angle can be adjusted. The apparatus may form a closed aggregate extending between at least the point of process air entry until the end of the drawing channel, so no air can enter from the outside and no process air supplied can escape to the outside. In one embodiment the apparatus comprises at least one diffuser, which is arranged between the end of the drawing channel and the moving belt.

The pressure difference between the ambient pressure and the pressure in the process air cabin is usually higher than 2000 Pascal. It has been observed that, within reasonable overall ranges, higher cabin pressures tend to lead to curvatures in the desired ranges and have a positive influence on crimp. In preferred embodiments, the cabin pressure is hence higher than 2500 Pascal, more preferably higher than 3000 Pascal or even higher than 3500 Pascal. For process stability, on the upper end, the cabin pressures preferably are less than 6000 Pascal and preferably less than 5000 Pascal.

Suitable process air temperatures are usually greater than 10°C. It has been observed, however, that, within reasonable overall ranges, higher process air temperatures tend to lead to curvatures in the desired ranges and have a positive influence on crimp. In preferred embodiments, the process air temperature is hence higher than 20°C, more preferably higher than 25°C. On the upper end, the process air temperatures are preferably below 60°C. If process air of two different temperatures is applied to the fibers during drawing, the above description relates to the process temperature of the air contacting the filaments first.

The maximum air speed in the drawing channel is usually higher than 50 m/s.

Yet further, the invention relates to a hygiene product comprising a nonwoven fabric sheet or a multilayer sheet according to the invention. The sheets of the present invention may be used in the hygiene industry as nonwoven sheets in hygiene products such as adult incontinence products, baby diapers, sanitary napkins and the like.

Further details and advantages of the invention will become apparent from the figures and examples described in the following. The figures show:

Figure 1:     a schematic cross-section of a generic side-by-side bicomponent fiber without curvature;

Figure 2:     a schematic illustration of a crimped fiber;

Figure 3: a schematic illustration of a spinning machine suitable for producing spunbonded nonwoven fabric sheets according to the invention;

Figure 4: a schematic illustration of a production line suitable for producing multilayer sheets according to the invention;

Figure 5: a SEM (Scanning Electron Microscope) picture of a cross-section of a side-by-side bicomponent fiber having a curved interface line;

Figure 6: a schematic illustration of a cross-section of an eccentric sheath-core fiber having a D-shaped core and a curved interface line; and

Figure 7: a graph where material thickness is plotted against the interface curvature for some examples.

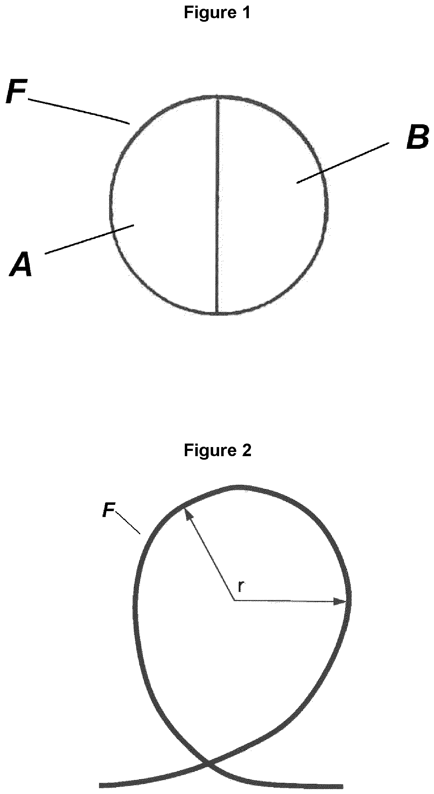

Figure 1 shows schematic illustration of a cross-section of a side-by-side bicomponent fiber. The fiber F comprise first and second polymer components A and B arranged side-by-side. The arrangement extends over the entire length of the fiber.

Figure 2 is a schematic illustration of a section of a crimped fiber F as comprised in a nonwoven fabric sheet of the invention. The fiber is curved and comprises a certain crimp radius and a certain crimp count.

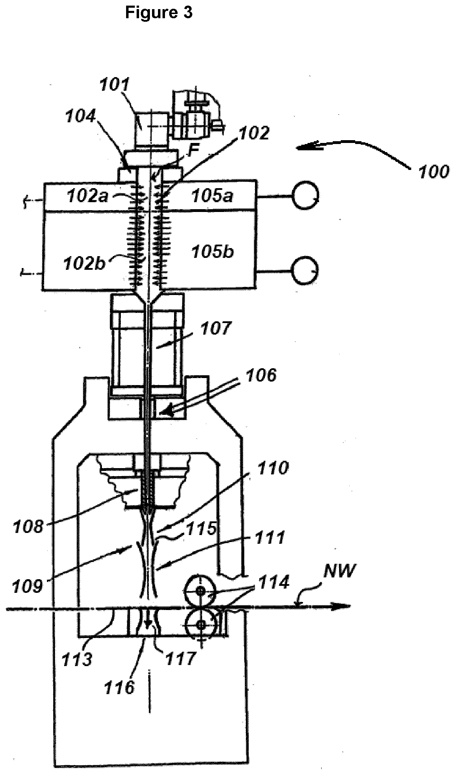

Figure 3 shows a spinning machine 100 that is suitable for producing spunbonded nonwovens according to the invention. Spunbonded nonwovens NW are produced from continuous fibers F of thermoplastic material, which are spun in a spinnerette 101 and subsequently passed through a cooling device 102. A monomer suctioning device 104 to remove gases in the form of decomposition products, monomers, oligomers and the like generated during the spinning of the fibers F is arranged between the spinnerette 101 and the cooling device 102. The monomer extraction device 4 comprises suction openings or suction gaps.

In the cooling device 102, process air is applied to the fiber curtain from the spinnerette 101 from opposite sides. The cooling device 102 is divided into two sections 102a and 102b, which are arranged in series along the flow direction of the fibers. Thus, process air of a relatively higher temperature (for example 60°C) can be applied to the fibers at an earlier stage in chamber section 102a and process air of a relatively lower temperature (for example 30°C) can be applied to the fibers at a later stage in chamber section 102b. The supply of process air takes place via air supply chambers 105a and 105b, respectively. The cabin pressure within chambers 105a and 105b can be the same and can, for example, be about 3000 Pascal above ambient pressure, for example.

A drawing device 106 to draw and stretch the fibers F is arranged below the cooling device 102. The drawing device includes an intermediate channel 107, which preferably converges and gets narrower with increasing distance from the spinnerette 101. It one embodiment the converging angle of the intermediate channel 107 can be adjusted. After the intermediate channel 107 the fiber curtain enters the lower channel 108.

The cooling device 102 and the drawing device 106, including intermediate channel 107 and lower channel 108, are together formed as a closed aggregate, meaning that over the entire length of the aggregate, no major air flow can enter from the outside and no major process air supplied in the cooling device 102 can escape to the outside. Some fume extraction devices directly under the spinneret extracting a minor air volume can be incorporated.

The fibers F leaving the drawing device 106 are then passed through a laying unit 109, which comprises two successively arranged diffusers 110 and 111 are provided, with diffuser 110 having a divergent section and diffuser 111 having a convergent section and an adjoining divergent section. The diffuser angles, in particular the diffuser angles in the divergent regions of the diffusers 110 and 111, are adjustable. Between the diffusers 110 and 111 is a gap 115 through which ambient air is sucked into the fiber flow space.

After passing through the laying unit 109, the fibers F are deposited as nonwoven web NW on a spinbelt 113, formed from an air-permeable web. A suctioning device 116 is arranged below the laydown area of the spinbelt 113 so suck off process air, which is illustrated in Figure 3 by the arrow 117.

Once deposited the nonwoven web NW is first guided through the gap between a pair of pre-consolidation rollers 114 for pre-consolidating the nonwoven web NW.

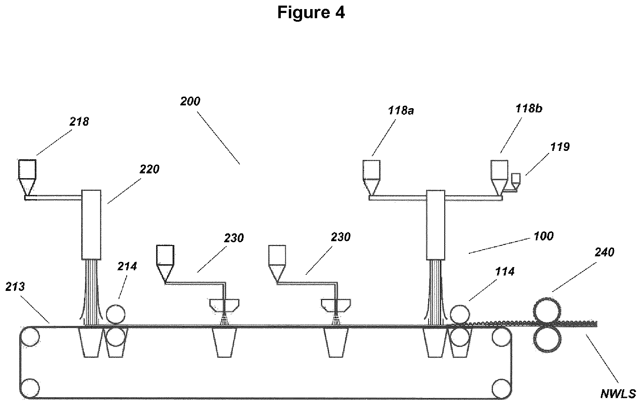

Figure 4 illustrates a production line 200 for producing SMS-type nonwoven laminate fabric sheets NWLS of the present invention.

Specifically, the machine is configured for producing an SMS-type nonwoven laminate fabric sheet NWLS in the form of, specifically, an $SMMS_H$ sheet, where "S" stands for a regular spunbonded layer, i.e. a layer formed from uncrimped fibers, "M" stands for a meltblown layer, and "$S_H$" stands for a high loft spunbonded layer formed from crimped bicomponent fibers. The layer "$S_H$" within this fabric is the layer that is according to the invention. An SMS-type sheet where the spunbonded structure on one side of the internal meltblown structure is high loft and the spunbonded structure on one side of the internal meltblown structure is a regular spunbonded sheet are known as semi-high-loft structures. The regular S layer provides mechanical stability, the M layer improves liquid barrier properties, and the loft S layer enhances softness and flexibility of the fabric.

The production line 200 comprises a spinning machine 100 for producing the $S_H$-layer, which is configured as illustrated in Figure 3. The two reservoirs 118a and 118b contain the two different polymer components A and B used for spinning the bicomponent fibers. An annex reservoir 119 may contain a masterbatch with an additive such as a nucleating agent or a visbreaking additive.

Further, the production line 200 comprises a spinbelt 213, a first spinning machine 220, comprising only one polymer reservoir 218 and configured for spinning monocomponent fibers, for forming the regular S layer, two meltblowing machines 230 for forming the MM double layer meltblown structure. The machines 220, 230 and 100 are serially arranged along the spinbelt 213.

Downstream each spinning machine 220 and 100 a pair of pre-consolidation rollers 214 and 114 is arranged. A calender / embossing roll 240 for firmly bonding the layers of the laminate sheet NWLS is arranged downstream the last spinning machine.

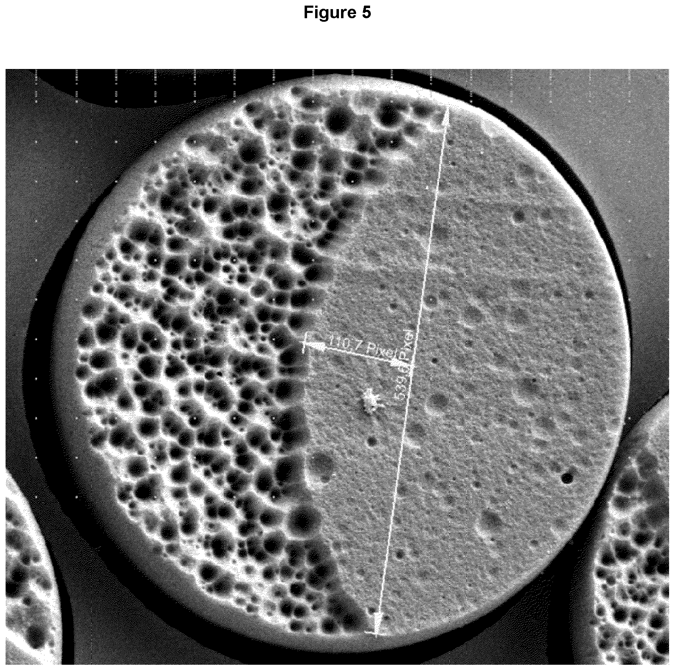

Figure 5 shows an SEM picture (Scanning Electron Microscope) of a cross-section of a bicomponent fiber having a curved interface line between the polymer components.

The picture of Figure 5 was taken by the method explained in the following, which is generally a good method to measure the curvature that defines the present invention. The curvature, in principle, is an absolute geometrical property of the fibers and not dependent on how it is measured. There are naturally some variations of curvature within a single fiber over its length, and not every fiber in the fabric sheet is the same. For practical purposes, it is most preferred that at least ten fibers are picked from a nonwoven sheet, the curvature of each of the picked fiber measured at a randomly selected length position, and the average number used.

When measured from a nonwoven sheet, firstly the machine direction is identified and the sheet encapsulated and demobilized in a polyester or epoxy resin. The resulting polymer block is then cut in a cross-machine directional plane that is perpendicular to the plane of the encapsulated nonwoven sheet. The cut surface is polished to have a visible interface after etching. The cross-sectional surface of the fibers exposed at the polished cut surface are etched to etch away the more amorphous of the polymer components. Fiber ends having the most circular cross sections and hence being oriented in machine direction as strictly as possible at the cut surface are selected for measurement. Small direction deviations can be corrected for distortion. In practical terms, a useful fiber-cross-section is an ellipse with a ratio between the major and minor axis below 1.2. Preferred is that the fibers show up as circle. After the SEM pictures are taken in a manner generally known to practitioners, picture based measurement systems like DatInf measure from DatInf GmbH can be used to determine curvature.

It can be seen that the interface between the two polymers is curved. More specifically, the interface line has the shape of a single arc and has no inflection point at which the curvature changes sign. In this example of Figure 5, the polymer on the left hand side was a propylene-$\alpha$-olefin copolymer with a relatively lower crystallization temperature and the polymer on the right hand side was a propylene homopolymer with a relatively higher crystallization temperature. The curved interface is arched toward the left side, i.e. arched toward the propylene-$\alpha$-olefin copolymer with a relatively lower crystallization temperature. The polymer component with the higher crystallization temperature has the more compact cross-section.

The curvature "c" is measured and calculated according to the following description. First the distance "b" between the polymer surface intersections is measured with a line drawn between the polymer intersections of the fiber surfaces. This line is the imaginary baseline. It is 540 pixels in the given example. Next the bow height "h" is measured by drawing a line orthogonally from the baseline (usually the middle of the baseline) to the crest of the curved interface line. The length of the line corresponds to the bow height "h" and, in the given example, is 111 pixels.

The curvature is then given by 111/540 = 0,206. Figure 5 hence shows a fiber having a curvature within the range required by the invention.

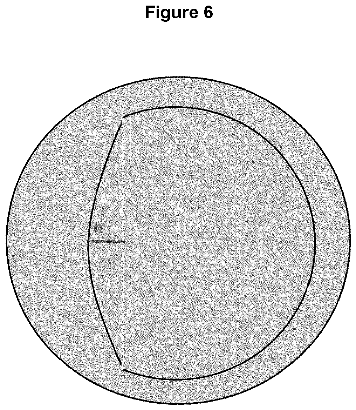

Figure 6 illustrates how the teaching of the present invention is also applicable to eccentric sheath-core fibers with a D-shaped core.

<u>Examples:</u>

A series of options with two polymers in a side-by-side configuration was processed on a machine as illustrated in Figure 3.

For all options, a basis weight of 20 g/m$^2$ for the spunbonded nonwoven material sheet. Specific polymer throughput in the spinnerette 101 was approximately 0,52 g polymer per hole per minute. The cabin pressure was kept mostly constant at 4000 Pascal. Other process settings were kept in a normal range for the production of crimped fibers. For instance, the ceramic pre-consolidation rollers 114 on the spinbelt at the outlet side of the beam were run with a temperature of 50-70°C. The calender (not shown in Figure 3, but positioned downstream the pre-consolidation rollers 114) was a standard open dot calender with 12% bonding area and 25 circular bonding points per cm$^2$. The temperature of the calender was in the range of 135-145°C.

A range of different polymer combinations was tested. Primary focus was on combinations with a propylene homopolymer as polymer A and a propylene-α-olefin-copolymer as polymer B. The varying parameter primarily was a difference in crystallization temperature.

The configuration of the individual examples is summarized in the following Table 1.

Table 1

| Example # | Polymer A | Polymer B | Mass content of polymer A [wt%] | Cabin pressure [Pa] | SAS gap [mm] | Pre-Diffusor gap [mm] |
|---|---|---|---|---|---|---|
| CE1 | PP2 | PP4 | 60 | 4000 | 22 | 24 |
| CE2 | PP2 | PP3 | 60 | 4000 | 22 | 24 |
| IE1 | PP1 | PP2 | 40 | 4000 | 22 | 24 |
| IE2 | PP1 | PP2 | 70 | 4000 | 22 | 24 |
| IE3 | PP1 | PP3 | 50 | 4000 | 22 | 24 |
| IE4 | PP1 | PP2 | 60 | 4000 | 22 | 24 |
| IE5 | PP1 | PP4 | 60 | 4000 | 22 | 24 |
| IE6 | PP1 | PP2 | 70 | 6000 | 22 | 24 |
| IE7 | PP5 | PP6 | 50 | 4000 | 22 | 24 |

In the Table, "CE" stands for comparative example and "IE" stands for inventive example.

Polymer component PP1 is the polymer Borealis HG 475 FB, a polypropylene homopolymer that is described on pages 17-20 of the application WO 2017/118612 A1.

Polymer component PP2 is a combination of 95 wt% PP1 and 5 wt% of a polypropylene masterbatch including a nucleating agent. The masterbatch is described as "IE2" in EP 3 184 587 B1 and is a nucleated polypropylene homopolymer, MFR 230/2.16 of 8.0 g/10 min.

Polymer component PP3 is a polypropylene homopolymer that is prepared as follows:

The catalyst used in the polymerization process of polymer component PP3 was prepared as follows:

Used chemicals:

20 % solution in toluene of butyl ethyl magnesium (Mg(Bu)(Et), BEM), provided by Chemtura
2-ethylhexanol, provided by Amphochem
3-Butoxy-2-propanol - (DOWANOL™ PnB), provided by Dow
bis(2-ethylhexyl)citraconate, provided by SynphaBase
TiCl4, provided by Millenium Chemicals
Toluene, provided by Aspokem
Viscoplex® 1-254, provided by Evonik
Heptane, provided by Chevron

Preparation of a Mg alkoxy compound

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45 °C. After addition was completed, mixing (70 rpm) of the reaction mixture was continued at 60 °C for 30 minutes. After cooling to room temperature 2.3 kg g of the donor bis(2-ethylhexyl)citraconate was added to the Mg-alkoxide solution keeping temperature below 25 °C. Mixing was continued for 15 minutes under stirring (70 rpm).

Preparation of solid catalyst component

20.3 kg of TiCl4 and 1.1 kg of toluene were added into a 20 l stainless steel reactor. Under 350 rpm mixing and keeping the temperature at 0 °C, 14.5 kg of the Mg alkoxy compound prepared in example 1 was added during 1.5 hours. 1.7 l of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50 °C and during the second wash to room temperature.

The thus obtained catalyst was used along with triethyl-aluminium (TEAL) as cocatalyst and dicyclopentyl dimethoxy silane donor (D-donor) as external donor. Polymerizations were performed in a Borstar PP-type polypropylene (PP) pilot plant, comprising one loop reactor and one gas phase reactor. polymerization conditions for PP3 base polymer are described in Table 2.

Table 2

| Prepolymerization | | |
|---|---|---|
| TEAL | [g/tC3] | 150 |
| Donor | [g/tC3] | 40 |
| Temperature | [°C] | 30 |
| res.time | [h] | 0.3 |
| Donor | [-] | D |
| **Loop** | | |
| Temperature | [°C] | 70 |
| Split | [%] | 44 |
| H2/C3 ratio | [mol/kmol] | 0.5 |
| C2/C3 ratio | [mol/kmol] | 4.8 |
| MFR$_2$ | [g/10min] | 2.7 |
| XCS | [wt.-%] | 5 |
| **GPR 1** | | |
| Temperature | [°C] | 80 |
| Pressure | [kPa] | 2000 |
| Split | [%] | 56 |
| H2/C3 ratio | [mol/kmol] | 6.4 |
| C2/C3 ratio | [mol/kmol] | 11.6 |

To obtain polymer component PP3 the polymer thus obtained was then visbroken together with 5 wt% of PP-MB, 500ppm of Irganox 3114(BASF), 500 ppm of Irgafos 168 (BASF), 500 ppm of Ceasit FI (Baerlocher) by a co-rotating twin-screw extruder at 200-230°C using an appropriate amount of (tert.butylperoxy)-2,5-dimethylhexane (Trigonox 101, distributed by Akzo Nobel, Netherlands).

Polymer component PP4 is a polypropylene copolymer as described in EP 2 999 721 B2 as inventive example "IE3".

Polymer component PP5 is the commercial grade resin Sabic 511A.

Polymer component PP6 is the commercial grade resin Basell Moplen RP248R.

Table 3 below shows physical properties of the polymer components PP1-PP6.

Table 3

| | | PP1 | PP2 | PP3 |
|---|---|---|---|---|
| MFR* | [g/10min] | 27 | 27 | 27 |
| Mw/Mn** | [-] | 4.7 | 4.7 | 4.6 |
| Mz/Mw** | [-] | 2.07 | 2.08 | 2.06 |

(continued)

|  |  | PP1 | PP2 | PP3 |
|---|---|---|---|---|
| XCS*** | [wt.-%] | 4.5 | 4.4 | 3.4 |
| Tm**** | [°C] | 158 | 163 | 154 |
| $T_c$**** | [°C] | 111 | 124 | 119 |

Table 3 (ctnd.)

|  |  | PP4 | PP5 | PP6 |
|---|---|---|---|---|
| MFR* | [g/10min] | 33 | 25 | 30 |
| Mw/Mn** | [-] | 6.4 |  |  |
| Mz/Mw** | [-] | 2.07 |  |  |
| XCS*** | [wt.-%] | 8.1 |  |  |
| Tm**** | [°C] | 149 | 164 | 142 |
| $T_c$**** | [°C] | 120 | 122 | 112 |

*MFR is measured according to ISO 1133 (230°C, 2.16 kg load).

**Number average molecular weight ($M_n$), weight average molecular weight ($M_w$) and Z-average molecular weight ($M_z$) were determined by Gel Permeation Chromatography (GPC) according to ISO 16014-4:2003 and ASTM D 6474-99. A PolymerChar GPC instrument, equipped with infrared (IR) detector was used with 3 x Olexis and 1 x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 $\mu$L of sample solution were injected per analysis. The column set was calibrated using universal calibration (according to ISO 16014-2: 2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving the polymer sample to achieve concentration of ~1 mg/ml (at 160°C) in stabilized TCB (same as mobile phase) for 2.5 hours for PP at max. 160°C under continuous gently shaking in the autosampler of the GPC instrument.

***The xylene soluble fraction at room temperature (xylene cold soluble XCS, wt%): The amount of the polymer soluble in xylene is determined at 25 °C according to ISO 16152; 5th edition; 2005-07-01.

****Melting temperature (Tm) and crystallization temperature (Tc) are measured with a TA Instrument Q200 differential scanning calorimetry (DSC) on 5 to 7 mg samples. DSC is run according to ISO 11357-1, -2 and -3 / method C2 in a heat / cool / heat cycle with a scan rate of 10 °C/min in the temperature range of -30 to +225°C. Crystallization temperature (Tc) is determined from the cooling step, while melting temperature (Tm) is determined from the second heating step.

The parameters measured for the examples of Table 1 are summarized in the following Table 4.

Table 4

| Example # | Fabric weight [g/m²] | *Fabric Thickness [mm] | "Curvature |
|---|---|---|---|
| CE1 | 20,1 | 0,33 | 0,03 |
| CE2 | 20,3 | 0,36 | 0,28 |
| IE1 | 19,6 | 0,46 | 0,11 |
| IE2 | 19,7 | 0,54 | 0,13 |
| IE3 | 20,2 | 0,57 | 0,12 |
| IE4 | 19,3 | 0,58 | 0,17 |
| IE5 | 18,6 | 0,63 | 0,13 |
| IE6 | 20,4 | 0,70 | 0,12 |

(continued)

| Example # | Fabric weight [g/m$^2$] | *Fabric Thickness [mm] | "Curvature |
|---|---|---|---|
| IE7 | 20,7 | 0,41 | 0,21 |

*Fabric thickness as measured according to WSP.120.6, option A, pressure of 0,5 kPa on a 2500 mm$^2$ plate
"Curvature was determined by the method as specified further above in connection with Figure 5

Table 4 (cntd.)

| Example # | ***MD tensile strength [N/5cm] | ***CD tensile strength [N/5cm] | ***MD elongation [%] | ***CD elongation [%] |
|---|---|---|---|---|
| CE1 | 33,5 | 20,7 | 127 | 136 |
| CE2 | 31,3 | 20,3 | 125 | 148 |
| IE1 | 23,8 | 15,1 | 137 | 143 |
| IE2 | 21,0 | 11,7 | 126 | 116 |
| IE3 | 20,8 | 13,7 | 120 | 150 |
| IE4 | 19,6 | 11,9 | 144 | 145 |
| IE5 | 10,4 | 5,8 | 188 | 164 |
| IE6 | 22,6 | 11,2 | 143 | 140 |
| IE7 | 24,4 | 15,5 | 135 | 141 |

MD: Machine Direction
CD: Cross machine Direction
***Tensile and elongation properties were determined according to WSP 110.4

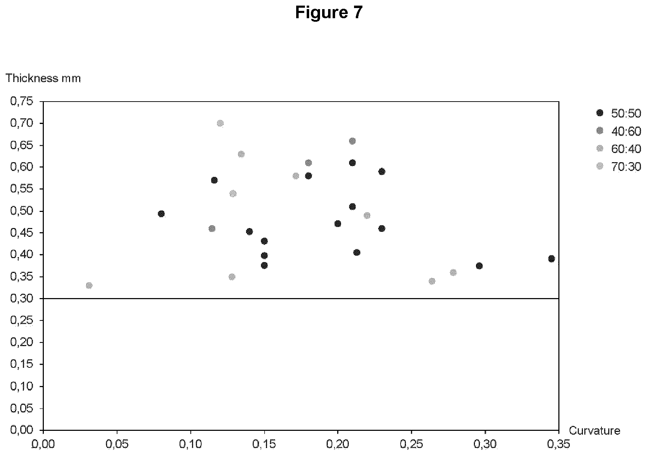

Figure 7 illustrates a graphic where material thickness (of the 20 g/m$^2$ materials), which correlates to loft and fiber crimp, is plotted against the curvature "c" (determined as explained above) for examples IE1-IE6 and some additional examples. Since a standard 20 g/m$^2$ spunbond nonwoven without any crimped fibers and bonded with the same bonding calender will have an thickness of approximately 0,28 mm, a baseline was drawn at 0,30 mm. It becomes apparent that loft, and hence fiber crimp, is most prominent when the values for the curvature "c" is between about 0.05 and about 0.25, peaking in between about 0.12 and about 0.20. This applies independently of whether the weight ratio between polymers A and B in the fibers is 50:50, 40:60, 60:40 or 70:30.

**Claims**

1.  A nonwoven fabric sheet (NW) comprising crimped multicomponent fibers (F), wherein the fibers (F) comprise two different polymer components (A) and (B) distributed over the cross section of the fiber (F) in a side by side arrangement,
    **characterized in that**

    the interface line, contained in the radial plane of the fibers (F), between the two polymer components (A) and (B) is curved and its curvature (c) is

$$c = \frac{h}{b} = 0.05 \; to \; 0.25$$

    wherein the baseline length (b) is the length of the imaginary straight baseline connecting the two endpoints of the curved interface line, and the bow height (h) is the distance of the crest of the curved interface line from the baseline, wherein the interface line has the shape of a single arc devoid of an inflection point at which the curvature changes sign.

2. The nonwoven fabric sheet (NW) of claim 1, wherein the curvature (c) of the interface line is

$$c = \frac{h}{b} = 0.08 \; to \; 0.22, preferably \; 0.10 \; to \; 0.20$$

3. The nonwoven fabric sheet (NW) of any preceding claim, wherein sheet (NW) is a spunbonded nonwoven fabric sheet and wherein the crimped multicomponent fibers (F) are spunbonded fibers.

4. The nonwoven fabric sheet (NW) of any preceding claim, one of the polymer components (A) is a propylene homopolymer and the other one of the polymer components (B) is a propylene-$\alpha$-olefin copolymer, wherein the propylene-$\alpha$-olefin copolymer preferably has a co-monomer content of between 1.0 and 5.5 weight percent.

5. The nonwoven fabric sheet (NW) of any preceding claim, wherein the absolute value of the difference of the crystallization temperature [$T_c$(A)] of the polymer component (A) and the crystallization temperature [$T_c$(B)] of the polymer component (B) is greater than 0°C and smaller than 30°C, preferably greater than 10°C and smaller than 25°C, when measured by DSC according to ISO 11357-1 & -2, wherein preferably the curved radial interface line is arched towards the polymer component with the lower crystallization temperature and the polymer component with the higher crystallization temperature has the more compact cross-section.

6. The nonwoven fabric sheet (NW) of any preceding claim, wherein absolute value for the crystallization temperature [$T_c$(A)] for the polymer component (A) with the higher crystallization temperature preferably lies in the range of between 90°C to 135°C, when measured by DSC according to ISO 11357-1 & -2, and wherein the absolute value for the crystallization temperature [$T_c$(B)] for the polymer component (B) with the lower crystallization temperature preferably lies in the range of between 80°C to 125°C, when measured by DSC according to ISO 11357-1 & -2.

7. The nonwoven fabric sheet (NW) of any preceding claim, wherein one or both of the polymer components (A) and (B) include a nucleating agent, preferably a nonitol-or a sorbitol-based nucleating agent, wherein the nucleating agent preferably is present in an amount of between 0.15 ppm to 3000 ppm.

8. The nonwoven fabric sheet (NW) of any preceding claim, wherein absolute value for the melting temperature [$T_m$(A)] for the polymer component (A) with the higher melting temperature preferably lies in the range of between 155°C to 164°C, when measured by DSC according to ISO 11357-1 & -2, and wherein the absolute value for the melting temperature [$T_m$(B)] for the polymer component (B) with the lower melting temperature preferably lies in the range of between 142°C to 155°C, when measured by DSC according to ISO 11357-1 & -2.

9. The nonwoven fabric sheet (NW) of any preceding claim, wherein one or both of the polymer components (A) and (B) have a melt flow rate of 15 to 120 g/10 min when determined according to ISO 1133 at 230°C and 2.16 kg and/or wherein one or both of the polymer components (A) and (B) have a polydispersity $M_w/M_n$ of 2.5 to 10.0 when measured by size exclusion chromatography according to ISO 16014, wherein preferably the absolute difference between the polydispersity of the two polymer components is preferably 0.3 or higher.

10. The nonwoven fabric sheet (NW) of any preceding claim, wherein one or both of the polymer components (A) and (B) include a visbreaking additive, preferably an organic peroxide or an organic hydroxylamine ester, wherein the visbreaking additive preferably is present in an amount of between 100 ppm and 500 ppm.

11. The nonwoven fabric sheet (NW) of any preceding claim, wherein the weight ratio between the two polymer components (A) and (B) is between 80:20 and 20:80, more preferably between 60:40 and 40:60.

12. The nonwoven fabric sheet (NW) of any one of claims 5 to 11, wherein there is an excess of the polymer component (B) with the lower crystallization temperature in the multicomponent fiber.

13. A multilayer sheet (NWLS) comprising a spunbonded nonwoven fabric sheet (NW) of any one of claims 3 to 12 and, additionally, at least one spunbonded nonwoven fabric sheet and/or at least one meltblown nonwoven fabric sheet.

14. A method for making a spunbonded nonwoven fabric sheet (NW) of any one of claims 3 to 12 or a multilayer sheet (NWLS) of claim 13, wherein the spunbonded nonwoven fabric sheet (NW) is made in an apparatus (100) comprising at least two extruders with a spinnerette (101), a drawing channel (107, 108) and a moving belt (113), wherein the fibers (F) are spun in a spinnerette (101), drawn in a drawing channel (107, 108) and laid down on a moving belt (113), wherein the apparatus (100) comprises a pressurized process air cabin (105a, 105b) from which process air is directed through the drawing channel (107, 108) to draw fibers.

**15.** A hygiene product comprising a spunbonded nonwoven fabric sheet (NW) of any one of claims 1 to 12 or a multilayer sheet (NWLS) of claim 13.

**Patentansprüche**

**1.** Vliesstofflage (NW), umfassend gekräuselte Mehrkomponentenfasern (F), wobei die Fasern (F) zwei unterschiedliche Polymerkomponenten (A) und (B) umfassen, die über den Querschnitt der Faser (F) in einer Seite-an-Seite-Anordnung verteilt sind,
**dadurch gekennzeichnet, dass**

die Grenzlinie, die in der Radialebene der Fasern (F) enthalten ist, zwischen den beiden Polymerkomponenten (A) und (B) gekrümmt ist und ihre Krümmung (c) beträgt

$$c = \frac{h}{b} = 0{,}05 \; bis \; 0{,}25$$

wobei die Grundlinienlänge (b) die Länge der imaginären geraden Grundlinie ist, die die zwei Endpunkte der gekrümmten Grenzlinie verbindet, und die Wölbungshöhe (h) der Abstand der Spitze der gekrümmten Grenzlinie von der Grundlinie ist, wobei die Grenzlinie die Form eines einzelnen Bogens ohne einen Wendepunkt aufweist, an dem die Krümmung das Vorzeichen wechselt.

**2.** Vliesstofflage (NW) nach Anspruch 1, wobei die Krümmung (c) der Grenzlinie beträgt

$$c = \frac{h}{b} = 0{,}08 \; bis \; 0{,}22, \; bevorzugt \; 0{,}10 \; bis \; 0{,}20.$$

**3.** Vliesstofflage (NW) nach einem der vorstehenden Ansprüche, wobei die Lage (NW) eine Spinnvlieslage ist und wobei die gekräuselten Mehrkomponentenfasern (F) Spinnvliesfasern sind.

**4.** Vliesstofflage (NW) nach einem der vorstehenden Ansprüche, wobei eine der Polymerkomponenten (A) ein Propylenhomopolymer und die andere der Polymerkomponenten (B) ein Propylen-$\alpha$-Olefin-Copolymer ist, wobei das Propylen-$\alpha$-Olefin-Copolymer bevorzugt einen Comonomergehalt zwischen 1,0 und 5,5 Gew.-% aufweist.

**5.** Vliesstofflage (NW) nach einem der vorstehenden Ansprüche, wobei der Absolutwert der Differenz aus der Kristallisationstemperatur [$T_c(A)$] der Polymerkomponente (A) und der Kristallisationstemperatur [$T_c(B)$] der Polymerkomponente (B) größer als 0 °C und kleiner als 30 °C ist, bevorzugt größer als 10 °C und kleiner als 25 °C, gemessen mittels DSC gemäß ISO 11357-1 & -2, wobei bevorzugt die gekrümmte radiale Grenzlinie in Richtung der Polymerkomponente mit der niedrigeren Kristallisationstemperatur gebogen ist und die Polymerkomponente mit der höheren Kristallisationstemperatur den kompakteren Querschnitt aufweist.

**6.** Vliesstofflage (NW) nach einem der vorstehenden Ansprüche, wobei der Absolutwert für die Kristallisationstemperatur [$T_c(A)$] für die Polymerkomponente (A) mit der höheren Kristallisationstemperatur bevorzugt im Bereich zwischen 90 °C und 135 °C liegt, gemessen mittels DSC gemäß ISO 11357-1 & -2, und wobei der Absolutwert für die Kristallisationstemperatur [$T_c(B)$] für die Polymerkomponente (B) mit der niedrigeren Kristallisationstemperatur bevorzugt im Bereich zwischen 80 °C und 125 °C liegt, wenn mittels DSC gemäß ISO 11357-1 &-2 gemessen wird.

**7.** Vliesstofflage (NW) nach einem der vorstehenden Ansprüche, wobei eine oder beide der Polymerkomponenten (A) und (B) ein Nukleierungsmittel, bevorzugt ein Nukleierungsmittel auf Nonitol- oder Sorbitol-Basis, beinhalten, wobei das Nukleierungsmittel bevorzugt in einer Menge zwischen 0,15 ppm und 3000 ppm vorhanden ist.

**8.** Vliesstofflage (NW) nach einem der vorstehenden Ansprüche, wobei der Absolutwert für die Schmelztemperatur

[T$_m$(A)] für die Polymerkomponente (A) mit der höheren Schmelztemperatur bevorzugt im Bereich zwischen 155 °C bis 164 °C liegt, gemessen mittels DSC gemäß ISO 11357-1 & -2, und wobei der Absolutwert für die Schmelztemperatur [T$_m$(B)] für die Polymerkomponente (B) mit der niedrigeren Schmelztemperatur bevorzugt im Bereich zwischen 142 °C und 155 °C liegt, wenn mittels DSC gemäß ISO 11357-1 & -2 gemessen wird.

9. Vliesstofflage (NW) nach einem der vorstehenden Ansprüche, wobei eine oder beide der Polymerkomponenten (A) und (B) eine Schmelzflussrate von 15 bis 120 g/10 min aufweisen, bestimmt gemäß ISO 1133 bei 230 °C und 2,16 kg, und/oder wobei eine oder beide der Polymerkomponenten (A) und (B) eine Polydispersität M$_w$/M$_n$ von 2,5 bis 10,0 aufweisen, wenn sie durch Größenausschlusschromatographie gemäß ISO 16014 gemessen werden, wobei bevorzugt die absolute Differenz zwischen der Polydispersität der zwei Polymerkomponenten bevorzugt 0,3 oder höher ist.

10. Vliesstofflage (NW) nach einem der vorstehenden Ansprüche, wobei eine oder beide der Polymerkomponenten (A) und (B) ein Visbreaking-Additiv, bevorzugt ein organisches Peroxid oder einen organischen Hydroxylaminester, beinhalten, wobei das Visbreaking-Additiv bevorzugt in einer Menge zwischen 100 ppm und 500 ppm vorhanden ist.

11. Vliesstofflage (NW) nach einem der vorstehenden Ansprüche, wobei das Gewichtsverhältnis zwischen den zwei Polymerkomponenten (A) und (B) zwischen 80:20 und 20:80, bevorzugt zwischen 60:40 und 40:60, liegt.

12. Vliesstofflage (NW) nach einem der Ansprüche 5 bis 11, wobei in der Mehrkomponentenfaser ein Überschuss der Polymerkomponente (B) mit der niedrigeren Kristallisationstemperatur vorhanden ist.

13. Mehrschichtlage (NWLS, Engl. multilayer sheet), umfassend eine Spinnvlieslage (NW) nach einem der Ansprüche 3 bis 12, und zusätzlich mindestens eine Spinnvlieslage und/oder mindestens eine schmelzgeblasene Vliesstofflage.

14. Verfahren zum Bilden einer Spinnvlieslage (NW) nach einem der Ansprüche 3 bis 12 oder einer Mehrschichtlage (NWLS) nach Anspruch 13, wobei die Spinnvlieslage (NW) in einer Vorrichtung (100) gebildet ist, umfassend mindestens zwei Extruder mit einer Spinndüse (101), einem Ziehkanal (107, 108) und einem Laufband (113), wobei die Fasern (F) in einer Spinndüse (101) gesponnen, in einem Ziehkanal (107, 108) gezogen und auf einem laufenden Band (113) abgelegt werden, wobei die Vorrichtung (100) eine unter Druck stehende Prozessluftkabine (105a, 105b) umfasst, aus der Prozessluft durch den Ziehkanal (107, 108) geleitet wird, um Fasern zu ziehen.

15. Hygieneprodukt, umfassend eine Spinnvlieslage (NW) nach einem der Ansprüche 1 bis 12 oder eine Mehrschichtlage (NWLS) nach Anspruch 13.

**Revendications**

1. Feuille de non-tissé (NW) comprenant des fibres à multicomposants frisées (F), les fibres (F) comprenant deux composants polymères différents (A) et (B) répartis sur la section transversale de la fibre (F) en agencement côte à côte,
   **caractérisée en ce que**

   la ligne d'interface, contenue dans le plan radial des fibres (F), entre les deux composants polymères (A) et (B) est incurvée, et sa courbure (c) est

$$c = \frac{h}{b} = 0{,}05 \text{ à } 0{,}25,$$

   la longueur (b) de ligne de base étant la longueur de la ligne de base droite imaginaire reliant les deux extrémités de la ligne d'interface incurvée, et la hauteur de courbe (h) étant la distance de la crête de la ligne d'interface incurvée à la ligne de base, la ligne d'interface présentant la forme d'un arc simple dépourvu de point d'inflexion au niveau duquel la courbure change de signe.

2. La feuille de non-tissé (NW) de la revendication 1, dans laquelle la courbure (c) de la ligne d'interface est

$$c = \frac{h}{b} = 0,08 \text{ à } 0,22, \text{ de préférence } 0,10 \text{ à } 0,20.$$

3. La feuille de non-tissé (NW) d'une revendication précédente quelconque, dans laquelle la feuille (NW) est une feuille de non-tissé filée-liée et dans laquelle les fibres à multicomposants frisées (F) sont des fibres filées-liées.

4. La feuille de non-tissé (NW) d'une revendication précédente quelconque, dans laquelle l'un des composants polymères (A) est un homopolymère de propylène et l'autre des composants polymères (B) est un copolymère de propylène-α-oléfine, et dans laquelle le copolymère de propylène-α-oléfine présente de préférence une teneur en comonomère comprise entre 1,0 et 5,5 pour cent en poids.

5. La feuille de non-tissé (NW) d'une revendication précédente quelconque, dans laquelle la valeur absolue de la différence entre la température de cristallisation [$T_c$(A)] du composant polymère (A) et la température de cristallisation [$T_c$(B)] du composant polymère (B) est supérieure à 0 °C et inférieure à 30 °C, de préférence supérieure à 10 °C et inférieure à 25 °C, lors de la mesure par DSC selon ISO 11357-1 et -2, et dans laquelle, de préférence, la ligne d'interface radiale incurvée est arquée vers le composant polymère à température de cristallisation inférieure, et le composant polymère à température de cristallisation supérieure présente la section transversale plus compacte.

6. La feuille de non-tissé (NW) d'une revendication précédente quelconque, dans laquelle la valeur absolue pour la température de cristallisation [$T_c$(A)] pour le composant polymère (A) à température de cristallisation supérieure est comprise de préférence entre 90 °C et 135 °C, lors de la mesure par DSC selon ISO 11357-1 et -2, et dans laquelle la valeur absolue pour la température de cristallisation [$T_c$(B)] pour le composant polymère (B) à température de cristallisation inférieure est comprise de préférence entre 80 °C et 125 °C, lors de la mesure par DSC selon ISO 11357-1 et -2.

7. La feuille de non-tissé (NW) d'une revendication précédente quelconque, dans laquelle l'un des composants polymères (A) et (B), ou les deux, comprennent un agent de nucléation, de préférence un agent de nucléation à base de nonitol ou à base de sorbitol, et dans laquelle l'agent de nucléation est présent de préférence en une quantité comprise entre 0,15 ppm et 3000 ppm.

8. La feuille de non-tissé (NW) d'une revendication précédente quelconque, dans laquelle la valeur absolue pour la température de fusion [$T_m$(A)] pour le composant polymère (A) à température de fusion supérieure est comprise de préférence entre 155 °C et 164 °C, lors de la mesure par DSC selon ISO 11357-1 et -2, et dans laquelle la valeur absolue pour la température de fusion [$T_m$(B)] pour le composant polymère (B) à température de fusion inférieure est comprise de préférence entre 142 °C et 155 °C, lors de la mesure par DSC selon ISO 11357-1 et -2.

9. La feuille de non-tissé (NW) d'une revendication précédente quelconque, dans laquelle l'un des composants polymères (A) et (B), ou les deux, présentent un taux de fluidité à chaud compris entre 15 et 120 g/10 min lors de la détermination selon ISO 1133 à 230 °C et 2,16 kg, et/ou dans laquelle l'un des composants polymères (A) et (B), ou les deux, présentent une polydispersité $M_w/M_n$ comprise entre 2,5 et 10,0 lors de la mesure par chromatographie par exclusion de taille selon ISO 16014, et dans laquelle, de préférence, la différence absolue entre la polydispersité des deux composants polymères est de préférence égale ou supérieure à 0,3.

10. La feuille de non-tissé (NW) d'une revendication précédente quelconque, dans laquelle l'un des composants polymères (A) et (B), ou les deux, comprennent un additif de réduction de viscosité, de préférence un peroxyde organique ou un ester d'hydroxylamine organique, et dans laquelle l'additif de réduction de viscosité est présent de préférence en une quantité comprise entre 100 ppm et 500 ppm.

11. La feuille de non-tissé (NW) d'une revendication précédente quelconque, dans laquelle le rapport en poids entre les deux composants polymères (A) et (B) est compris entre 80:20 et 20:80, de préférence entre 60:40 et 40:60.

12. La feuille de non-tissé (NW) de l'une quelconque des revendication 5 à 11, dans laquelle il existe un excès de composant polymère (B) à température de cristallisation inférieure dans la fibre à multicomposants.

13. Feuille multicouche (NWLS) comprenant une feuille de non-tissé (NW) filée-liée de l'une quelconque des revendications 3 à 12 et, de plus, au moins une feuille de non-tissé filée-liée et/ou au moins une feuille de non-tissé produite par extrusion soufflage.

**14.** Procédé de fabrication d'une feuille de non-tissé (NW) filée-liée de l'une quelconque des revendications 3 à 12 ou d'une feuille multicouche (NWLS) de la revendication 13, dans lequel la feuille de non-tissé (NW) filée-liée est fabriquée dans un appareil (100) comprenant au moins deux extrudeuses comportant une filière (101), un canal d'étirage (107, 108) et une courroie mobile (113), dans lequel les fibres (F) sont filées dans une filière (101), étirées dans un canal d'étirage (107, 108) et déposées sur une courroie mobile (113), et dans lequel l'appareil (100) comprend une cabine à air de traitement sous pression (105a, 105b) à partir de laquelle de l'air de traitement est dirigé à travers le canal d'étirage (107, 108) afin d'étirer les fibres.

**15.** Produit hygiénique comprenant une feuille de non-tissé (NW) filée-liée de l'une quelconque des revendications 1 à 12 ou une feuille multicouche (NWLS) de la revendication 13.

**Figure 1**

**Figure 2**

**Figure 3**

# Figure 4

**Figure 5**

**Figure 6**

**Figure 7**

**EP 4 367 310 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6454989 B1
- EP 3165656 B1
- EP 3121314 B1
- EP 3246443 B1
- EP 3246444 B1
- EP 3321407 A1
- WO 2020230006 A1
- US 2010261399 A1
- WO 2021226246 A1
- WO 2017118612 A1
- EP 3184587 B1
- EP 2999721 B2